# EUROPÄISCHE PATENTANMELDUNG

(11) **EP 3 034 158 A1**
(43) Veröffentlichungstag der Anmeldung: **22.06.2016**
(21) Anmeldenummer: 14198633.1
(22) Anmeldetag: 17.12.2014
(51) Int. Cl.: B01D 67/00, B01D 69/12

(54) **Vorrichtung und Verfahren zur Herstellung ultradüner Filme**

(71) Anmelder: Universität Potsdam, 14469 Potsdam (DE)
(72) Erfinder: Abel, Markus, 14471 Potsdam (DE); Winkler, Michael, 10119 Berlin (DE); Kofod, Guggi, 2200 Kopenhagen (DK)
(74) Vertreter: Müller & Schubert

(57) **Zusammenfassung**

Gegenstand der vorliegenden Erfindung ist eine Vorrichtung zur Herstellung ultradünner Filme im Nanometerbereich in Form eines Rahmens (1), wobei der Rahmen (1) aus vier Seitenteilen (2, 2', 3, 3') gebildet ist und die Innenkanten der Seitenteile (2, 2', 3, 3') gradförmig ausgebildet sind.

Gegenstand der vorliegenden Erfindung ist ferner ein Verfahren zur Herstellung ultradünner Filme mittels einer erfindungsgemäßen Vorrichtung, wobei man
a) einen Rahmen (1) in ein Lösungsreservoir (10) eintaucht, um einen flüssigen Film zu erzeugen,
b) Zusätze, ausgewählt aus vernetzenden Substanzen ins Lösungsreservoir gibt,
c) den flüssigen Film durch thermische Konvektion innerhalb des Films durchmischt, und
d) den flüssigen Film durch Veränderung der Temperatur, mittels der innerhalb des Rahmens (1) angeordneten Elemente (5,6), verfestigt.

Die derart hergestellten Filme und die daraus erzeugten Membranen weisen eine Dicke von deutlich unter 500 nm auf. Freitragende Membranen in dieser Dicke sind bisher nicht bekannt.

## Beschreibung

Die vorliegende Erfindung betrifft eine Vorrichtung zur Herstellung ultradünner Filme im Nanometerbereich sowie ein Verfahren zu deren Herstellung unter Verwendung der Vorrichtung.

Die Verwendung ultradünner Membranen ist sehr vielseitig. In Abhängigkeit von der Schichtdicke und der Porosität sind diese vielseitig einsetzbar. Eines der wichtigsten Anwendungsgebiete ist die Wasserfiltration.

Jedoch werden dünne Membranen auch in funktionalen Sensoren verwendet, da das Verhältnis Volumen zu Oberfläche optimal ist. Welche chemischen Reaktionen auf der Oberfläche detektiert werden können hängt dabei von der Beschaffenheit der oberflächenaktiven Substanzen ab.

In Solarzellen werden Membranen verwendet, deren Oberflächen geladen sind und deren Zwischenschicht bei Lichteinfall Elektron/Loch-Paare freisetzt.

In Leitern, die durch gezieltes Design hergestellt werden, werden Membranen eingesetzt, in die zuvor Kohlenstoffnanoröhrchen eingebracht wurden. 3D Konstruktionen können dadurch erfolgen, dass mehrere Leiter-Membranen "gestapelt" werden.

Außerdem ist die Verwendung ultradünner Membranen in biomedizinischen Nachweisen oder bei entsprechender Verträglichkeit, als Substrat beziehungsweise temporärer Ersatz organischer Materialien denkbar.

Eine weitere Möglichkeit besteht darin, ultradünne Membranen als Gasspeicher zu verwenden, um optimierte Brennstoffzellen bereitzustellen.

Die Dynamik von dünnen, flüssigen Filmen wird von Gravitations-, Kapillar- oder Grenzflächenkräften beherrscht, die die Existenz eines Spaltdrucks induzieren. Der Spaltdruck kann als zusätzlicher Druck zwischen zwei Oberflächen im Hinblick auf den Flüssigkeitsdruck des Reservoirs oder als Summe mehrerer Beiträge, welche hauptsächlich elektrostatisch, van der Waals und sterische Wechselwirkungen sind, betrachtet werden. Das Verhältnis von Kapillardruck und Spaltdruck bestimmt die Gleichgewichtsschichtdicke eines Films.

Bekannt sind, in Abhängigkeit von der chemischen Zusammensetzung der Lösung, zwei thermodynamisch stabile Gleichgewichtsschichtdicken: Der Common Black Film (CBF) ist auf Grund seiner elektrischen Doppelschichtabstoßung stabil und hat eine Schichtdicke von mehr als 10 nm. Wenn die elektrostatische Barriere überwunden wird, reißt der Film oder der dünnere Newton Black Film (NBF) entsteht. Dieser ist auf Grund sterischer (z. B. entropischer) Abstoßung stabil. Die elektrostatische Barriere kann durch Erhöhung der Ionenkonzentration verringert werden, da die Oberflächenladung durch die Tenside abgeschirmt wird. Im Falle von nichtionischen Tensiden ist dies durch Erhöhung der Oberflächenkonzentration möglich, sodass die negative Ladung der Wasseroberfläche durch nichtionische Tensidmoleküle ersetzt wird. Der NBF besteht aus einer Doppelschicht von Amphiphilen, welche an der Filmoberfläche absorbiert werden und aus Hydratisierungswasser an den Tensidkopfgruppen, wodurch eine Schichtdicke von ungefähr der doppelten Länge der Tenside erreicht wird (z. B. 4-5 nm).

Schichtdicken, die größer als diese Gleichgewichtszustände sind, bezeichnet man als transient, da der Film im flüssigen Zustand weiter ausdünnen würde. Durch Bildung eines Gels, kann jedoch eine beliebige stabile Schichtdicke erreicht werden.

Für ein besseres Verständnis von Konvektionen in dünnen Flüssigkeitsfilmen wird das Rayleigh-Benard-Experiment verwendet. Im Zuge dessen sind die folgenden zwei dimensionslosen Kennzahlen von Bedeutung.
(a) Die Nusselt-Zahl, welche die Verbesserung der Wärmeübertragung von einer Oberfläche misst, wenn man die tatsächlichen Verhältnisse mit denen vergleicht, die auftreten würden, wenn die Wärmeleitung nur durch eine ruhende Schicht erfolgen würde. Damit setzt die Nusselt-Zahl die Intensität eines konvektiven Wärmeübergangs an einer Festkörperoberfläche ins Verhältnis zu einem bei ruhendem Fluid gedachten Festkörper, vorrausgesetzt es wirkt einzig eine Wärmeleitung.
(b) Die Reynolds-Zahl stellt das Verhältnis von Trägheits- zu Zähigkeitskräften dar (bzw. das Verhältnis von spezifischer Impulskonvektion zu Impulsdiffusion im System). Daraus ergibt sich, dass das Turbulenzverhalten geometrisch ähnlicher Körper bei gleicher Reynoldszahl identisch ist.

Im Gegensatz zu 3D-Konvektions-Experimenten gibt es nur wenige Experimente mit 2D-Systemen. In 2D-Systemen wird, im Gegensatz zu 3D-Systemen, die kinetische Energie durch sogenannte "umgekehrte Kaskaden" von kleinen zu großen Maßstäben transferiert.

H. Kellay et al. ("Experiments with turbulent soap films. " 1995, Physical Review Letters, 74 (20): 3975-3978) haben dünne, freistehende Schaumfilme in flüssigen Systemen eingesetzt. Ein kollabieren des Films wird dadurch verhindert, dass wiederholt Flüssigkeit in das System gepumpt wird, um den Flüssigkeitsverlust auf Grund von Verdampfung zu kompensieren. Diese Versuche resultierten in unkontrollierten Grenzkonditionen, da die freie Oberfläche sowohl in ihrer Dicke variieren, als auch instabil werden kann.

Jedoch ist dieses System für ein 2D-System geeignet, um Turbulenzen zu untersuchen. Die Herstellung freistehender ultradünner Membranen, ohne die wiederholte Zugabe von Flüssigkeit, wurde nicht offenbart.

Bis dato spielt die Untersuchung von Schaumfilmen die zentrale Rolle in wissenschaftlichen Studien, da die freistehenden dünnen Flüssigkeitsfilme immer noch eine Herausforderung sowohl in den Experimenten als auch in der Theorie darstellen.

Erste Experimente mit stationären Filmen und thermischer Übertragung wurden von Martin et al. ("Spectra of decaying turbulence in a soap film."1998, Physical Review Letters, 80 (18): 3964-3967), Seychelles et al. ("From intermittent to nonintermittent behaviour in two dimensional thermal convection in a soap bubble." 2010, Physical Review Letters, 105 (26): 264502) und Zhang et al. ("Density fluctuations in strongly stratified two-dimensional turbulence." 2005, Physical Review Letters, 94 (17): 174503) durchgeführt. Die chemischen Zusammensetzungen und die Verdampfung des Films wurden weder kontrolliert noch überwacht. Häufig werden im Stand der Technik kommerziell erhältliche Detergenzien verwendet, die eine Reihe von unbekannten Tensiden und gegebenenfalls Anti-Schaummitteln enthalten, welche die Stabilität des Films limitieren. Die Herstellung freistehender Membranen mittels spezifischer Tenside, welche die Stabilität zu gewährleisten, wurde nicht offenbart.

Dahingegen führten Ivanov et al. ("Thin liquid films: fundametals and applications" 1988, Vol. 29 of surfactant science series), Stubenrauch und Miller ( "Stability of foam films and surface rheology: an oscillating bubble study at low frequencies." 2004, The Journal of Physical Chemistry B, 108 (20): 6412-6421) und Tiwari et al. ("Stability and transient dynamics of thin liquid films flowing over locally heated surfaces." 2007, Physical Reviews, 76 (5): 056306) Experimente mit statischen, dünnen Filmen unter Verwendung spezifischer chemischer Substanzen und in einer kontrollierten Umgebung durch. Jedoch wurden keine Experimente mit freistehenden ultradünnen Membranen durchgeführt.

Bisher bekannte Nanomembranen werden größtenteils durch Beschichtungstechniken (coating) oder Gießverfahren erzeugt.

Bei den bekannten Gießverfahren werden großflächige, horizontal liegende Rahmen mit einer Lösung gefüllt, das Lösungsmittel verdampft oder die Schicht abgekühlt. Diese Herstellungsweise ergibt eine Schicht auf einem Trägermaterial, von dem sie für eine weitere Verwendung abgelöst werden muss. Nichtkristalline Stoffe können mit dem bekannten Gießverfahren erzeugt werden. Nachteilig an diesen Verfahren ist es, dass dies nur für Schichten ab einer Dicke von 1 µm geeignet ist.

Ein weiteres im Stand der Technik bekanntes Verfahren ist das Spin-Coating. Bei diesem Verfahren wird eine Lösung auf eine schnell rotierende Scheibe aufgebracht. Mittels dieses Verfahrens werden häufig Materialien beschichtet, da sich sehr dünne Schichten erzeugen lassen. Nachteilig an diesen Verfahren ist es, dass eine Unterlage oder ein Substrat benötig wird, das eine bestimmte chemische Beschaffenheit hat und somit maßgeblich die Struktur der Membran mitbestimmt.

Freitragende Membranen von Dicken unterhalb 500 nm können lediglich durch Dehnung der dickeren Schicht erreicht werden. Die Dehnung verändert jedoch die Morphologie der Schicht und setzt die Verwendung von verformbaren Materialien voraus.

Des Weiteren werden kristalline nanoporöse Materialien auch durch gezieltes Aufwachsen von einzelnen Lagen erzeugt. Nachteilig an diesen Verfahren ist der hohe Kostenfaktor, da diese Verfahren unter sehr kontrollierten Bedingungen ablaufen müssen. Außerdem sind die erzeugten Produkte nicht sehr groß und weisen lediglich geringe Abmessungen im mm-Bereich auf.

Aufgabe der vorliegenden Erfindung ist es daher, die Nachteile des Standes der Technik zu überwinden.

Die Aufgabe der Erfindung ist es, eine Vorrichtung bereitzustellen, mittels derer ultradünne Filme erzeugt werden können. Mittels dieser Vorrichtung soll es möglich sein, einen Film herzustellen, der freitragend und flexibel ist. Des Weiteren ist der Film langzeitstabil und weist eine Dicke von unter 500 nm auf. Dies führt dazu, dass der Film vielfältig einsetzbar ist.

Weiterhin ist es die Aufgabe der Erfindung eine Vorrichtung bereitzustellen, bei der kein Trägermaterial benötigt wird, um einen freistehenden, stabilen ultradünnen Film herzustellen.

Eine weitere Aufgabe der Erfindung ist es, ein Verfahren bereitzustellen, mittels dessen man unter Bezugnahme der bereitgestellten Vorrichtung ultradünne Filme herstellen kann.

Die Aufgabe der Erfindung wird gelöst durch die Bereitstellung einer Vorrichtung zur Herstellung ultradünner Filme im Nanometerbereich in Form eines Rahmens, wobei der Rahmen aus vier Seitenteilen gebildet ist und die Innenkanten der Seitenteile gradförmig ausgebildet sind. Es ist erfindungsgemäß vorgesehen, dass jeweils zwei Seitenteile waagerecht und jeweils zwei Seitenteile senkrecht angeordnet sind, um den Rahmen auszubilden. Dabei sind die waagerechten und die senkrechten Seitenteile bevorzugt jeweils parallel zueinander angeordnet.

Bevorzugt ist eine erfindungsgemäße Vorrichtung deren Innenkanten keilförmig oder prismenförmig ausgestaltet sind.

Weiterhin ist eine erfindungsgemäße Vorrichtung bevorzugt, deren Seitenteile bewegbar ausgebildet sind.

Ferner ist eine erfindungsgemäße Vorrichtung bevorzugt, dessen Rahmen durch die Seitenteile und zwei Halteteile, welche die Seitenteile miteinander verbinden, ausgebildet wird, wobei die senkrechten Seitenteile zwischen den waagerechten Seitenteilen angeordnet sind. Damit lässt sich die Breite der zu erzeugenden Filme einstellen.

Außerdem ist eine erfindungsgemäße Vorrichtung bevorzugt, bei der alle Seitenteile, unabhängig voneinander, Elemente zum Heizen und/oder Kühlen enthalten.

Besonders bevorzugt ist eine erfindungemäße Vorrichtung, bei der die Elemente zum Heizen und/oder Kühlen unabhängig voneinander ausgewählt sind aus Bohrungen, Kavitäten, Kühlschlangen, Peltierelemente oder andere elektrische Komponenten.

Insbesondere ist eine erfindungsgemäße Vorrichtung bevorzugt, bei der die Seitenteile unabhängig voneinander mit unterschiedlichen Temperaturen beaufschlagbar sind.

Vorteilhaft ist eine erfindungsgemäße Vorrichtung, bei der die Halteteile aus thermisch nichtleitendem Material ausgebildet sind oder eine thermisch nichtleitende Isolierschicht umfassen.

Insbesondere ist eine erfindungsgemäße Vorrichtung bevorzugt, bei der das thermisch nicht leitende Material oder die thermisch nichtleitende Isolierschicht aus Teflon besteht.

Weiterhin ist eine erfindungsgemäße Vorrichtung bevorzugt, bei welcher der Rahmen aus einem chemisch innertem und benetzbaren Material ausgebildet ist, wobei das Material bevorzugt ausgewählt ist aus Edelstahl oder Aluminium. Erfindungsgemäß sind auch weitere Materialien verwendbar, sofern diese gegenüber den Tensidlösungen inert sind. Es ist jedenfalls auch sicherzustellen, dass die verwendeten Materialien nicht die verwendeten Chemikalien in deren Wirkung beeinflussen. Geeignet sind daher auch Kunststoffe wie PTFE und PMMA. Die Auswahl des Materials richtet sich nach den Eigenschaften der jeweils verwendeten Lösungen. In wässrigen oder allgemein polaren Lösungen sind metallische Materialien wie Edelstahl oder Aluminium vorteilhaft. Bei unpolaren Lösungen, beispielsweise Öl- oder Polymerlösungen, kommen vorteilhafterweise Kunststoffe wie PTFE und PMMA in Betracht. Dem Fachmann ist ferner bekannt, dass die Benetzungscharakteristik der Materialien auch angepasst werden kann. Der Fachmann ist daher in der Lage, das geeignete Material für den jeweiligen Zweck anzupassen.

Außerdem ist eine erfindungsgemäße Vorrichtung bevorzugt, die weiterhin ein Gehäuse, bestehend aus einem Gehäuse-Unterteil und einem Gehäuse-Oberteil, welches den Rahmen und ein Lösungsreservoir umgibt, umfasst.

Besonders bevorzugt ist eine erfindungsgemäße Vorrichtung, bei der das Gehäuse aus einem chemisch inertem Material, ausgewählt aus Edelstahl, Polytetrafluorethylen oder Polymethylmethacrylat, besteht.

Erfindungsgemäß bevorzugt ist eine Vorrichtung, bei der innerhalb des Gehäuses ein Regelelement zur Temperaturregulierung angeordnet ist, wobei die Regelelemente ausgewählt sind aus Heizmatten, Wärmetauschern oder Peltierelementen. Dabei ist es erfindungsgemäß vorgesehen, dass Wärmetauscher mit einem angeschlossene externe Durchflusstemperierer versehen sind. Ferner können in die Gehäusewand eingesetzte Peltierelemente mit Wärmeabfuhr außerhalb des Gehäuses oder Heizmatten im Gehäuse, wenn nur eine Temperierung oberhalb der Umgebungstemperatur notwendig ist, vorgesehen sein. Zu jedem Regelelement ist natürlich ein Temperatursensor und eine entsprechende Steuerelektronik vorgesehen.

Ferner ist eine erfindungsgemäße Vorrichtung bevorzugt, bei der innerhalb des Gehäuses ein Verdampfer zur Regulierung der relativen Luftfeuchtigkeit angeordnet ist.

Die Aufgabe der vorliegenden Erfindung wird weiterhin gelöst durch ein Verfahren zur Herstellung ultradünner Filme unter Verwendung der erfindungsgemäßen Vorrichtung.

Erfindungsgemäß wird die Aufgabe der Erfindung gelöst durch ein Verfahren zur Herstellung ultradünner Filme unter Verwendung der erfindungsgemäßen Vorrichtung, wobei man a) einen Rahmen in ein Lösungsreservoir eintaucht, um einen flüssigen Film zu erzeugen, b) Zusätze, ausgewählt aus vernetzenden Substanzen ins Lösungsreservoir gibt, c) den flüssigen Film durch Konvektion innerhalb des Films durchmischt, und d) den flüssigen Film durch Veränderung der Temperatur, mittels der innerhalb des Rahmens angeordneten Elemente verfestigt. Der allgemeine Begriff "vernetzende Substanzen" ist dem Fachmann bekannt. Beispiele für wasserlösliche, vernetzende Substanzen sind u.a. Latex (kolloidale Dispersion von wasserlöslichen Polymeren), Gelatine, Agar.

Die vorliegende Erfindung wird mit den beigefügten Zeichnungen näher erläutert. Es zeigt:
Fig. 1 eine Seitenansicht auf eine erste Ausführungsform einer erfindungsgemäßen Vorrichtung;
Fig. 1a einen Querschnitt gemäß Figur 1;
Fig. 2 eine Seitenansicht auf eine zweite Ausführungsform einer erfindungsgemäßen Vorrichtung;
Fig. 2a einen Querschnitt gemäß Figur 2;
Fig. 3 eine Seitenansicht auf die dritte Ausführungsform einer erfindungsgemäßen Vorrichtung mit geänderter Anordnung der Seitenteile;
Fig. 3a einen Querschnitt gemäß Figur 3;
Fig. 4 eine Seitenansicht auf eine vierte Ausführungsform einer erfindungsgemäßen Vorrichtung;
Fig. 5 die Einzelteile eines Eintauchbades in teils perspektivischer Darstellung mit einer fünften Ausführungsform einer erfindungsgemäßen Vorrichtung; und
Fig. 6 eine perspektivische Ansicht eines Eintauchbades mit einer teilweise eingetauchten sechsten Ausführungsform einer erfindungsgemäßen Vorrichtung.

Die vorliegende Erfindung offenbart eine Vorrichtung und ein Verfahren zur Herstellung ultradünner Membranen. Diese ultradünne Membran kann zur Gastrennung in Detektoren oder zur Analyse der enthaltenen Feststoffe verwendet werden.

Erfindungsgemäß beträgt die Mindestdicke der ultradünnen Membranen 5 nm.

Überraschenderweise haben die Erfinder eine Vorrichtung und ein Verfahren gefunden, mit welchen man, im Gegensatz zu den bekannten Verfahren aus dem Stand der Technik, ohne die Verwendung von Trägermaterialien, ultradünne, flexible und langzeitstabile Membranen herstellen kann.

Zur Herstellung der erfindungsgemäßen Membran wird der Zusatz von Tensiden zur Lösung im Lösungsreservoir benötigt. Der Zusatz von Tensiden ermöglicht es freistehende Flüssigkeitsfilme zu generieren. Geeignete Tenside sind dem Fachmann an sich bekannt und können von diesem ohne Weiteres ausgewählt werden. Geeignet sind beispielsweise zuckerbasierte, nichtionische Tenside, z.B. n-Dodecyl-β-maltoside. Die jeweils verwendeten Tenside sind abhängig vom späteren Verwendungszweck der Membran. Grundsätzlich hat der Zusatz von Tensiden die Aufgabe die Schicht stabil zu halten (Verringerung der Oberflächenspannung, Erhöhung der Oberflächenelastizität).

Diese Filme werden erzeugt, indem man einen erfindungsgemäßen Rahmen in ein mit Lösung gefülltes Lösungsreservoir eingetaucht. Die Lösung, aus der die Filme erzeugt werden, besteht aus einer wässrigen Lösung mit Anteilen von Glycerin um die Viskosität zu beeinflussen.

Die Erzeugung des Films, setzt eine homogene Durchmischung des Films voraus. Die Durchmischung kann durch Wärme, angelegte Magnetfelder oder mit Hilfe eines elektrischen Feldes erfolgen. Die erfindungsgemäßen Elemente mittels derer die Durchmischung erfolgt, sind innerhalb der Seitenteile des Rahmens der Vorrichtung angeordnet. Diese Elemente können u.a. Bohrungen, Kavitäten, Kühlschlangen oder Peltierelemente umfassen.

Durch die Kontrolle der Temperatur und Luftfeuchtigkeit kann aus diesen Filmen eine langzeitstabile Membran erzeugt werden.

Durch Zusatz von vernetzenden Substanzen, wie Kohlenstoffnanoröhrchen, Polymeren oder anderen gelierenden Materialien ist es möglich, diese Filme durch Variation der Temperatur oder Verdampfung des Wassergehalts in eine langzeitstabile Membran zu überführen. Erfindungsgemäß erfolgt dies über Regelelemente zur Temperaturregelierung, die im Gehäuse angeordnet sind und/oder über Verdampfer die innerhalb des Gehäuses angeordnet sind.

Der Verzicht auf eine Trägerschicht bringt verschiedene Vorteile mit sich. Es sind zum Beispiel deutlich geringe Schichtdicken möglich, da die Membran keinem Ablöseprozess standhalten muss. Die erarbeiteten Schlüsseltechnologien sind die schnelle Überführung des Flüssigkeitsfilms in den Gleichgewichtszustand mittels Konvektion, die genaue chemische Zusammenstellung der Lösung und Kontrolle der umliegenden Atmosphäre, um ein Reißen des Films zu verhindern. Somit lassen sich sehr schnell stabile, nur wenige Nanometer dicke Schichten generieren.

Je nach Schichtdicke und Porosität sind diese Schichten vielseitig einsetzbar, wobei hier die Filtration von Flüssigkeiten und Gasen äußerst wichtig ist. Die folgenden Aspekte und Vorteile wurden durch Verwendung der erfindungsgemäßen Vorrichtung zur Herstellung einer ultradünnen Membran erzielt:

Das Verhältnis der Membran ist variabel.
Höhe der Membran: 5 - 30 mm
Breite der Membran: 5 - 50 mm

Die Rayleigh-Zahl kann zwischen einer Spanne von 10⁶ - 10⁷ variieren.

Die erfindungsgemäße Vorrichtung ist komplett transparent, wodurch eine optische Messung der Membran möglich ist.

Die Rückseite kann durch eine Germanium enthaltendes Fenster ausgetauscht werden, wodurch die Verwendung einer Wärmebildkamera möglich ist.

Das Fenster in der Vorderseite des Gehäuses ist nach unten hin abgewinkelt, um eine Reflektion des Lichts der Lichtquelle in der Kamera zu vermeiden.

Die Einhaltung einer gleichbleibenden Temperatur wird kontrolliert.

Die Vorderseite des Gehäuses kann erhitzt werden, um Kondensation zu vermeiden.

Die nachfolgenden Ausführungsbeispiele erläutern die Erfindung, unter Bezugnahme der Figuren näher, ohne den Umfang der Erfindung zu beschränken.

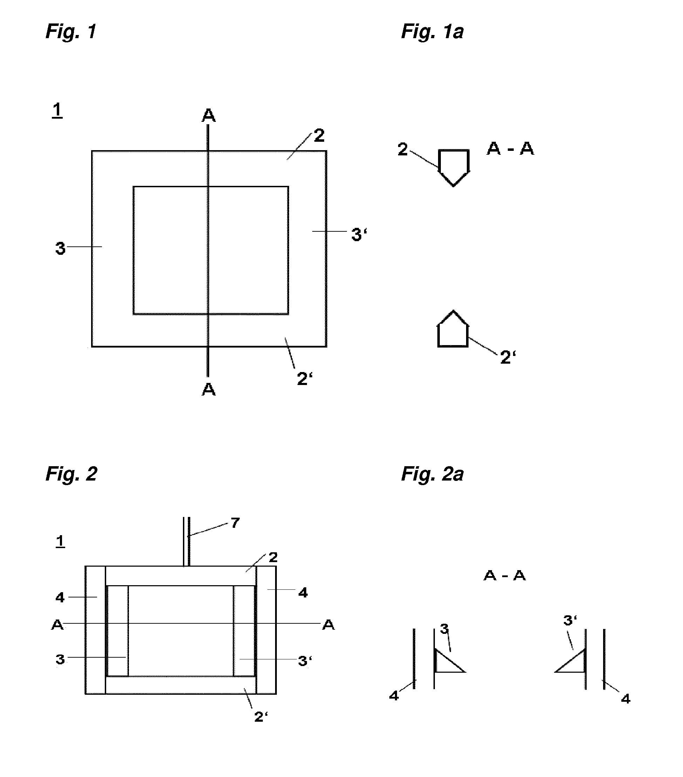

Figur 1 zeigt die Aufsicht einer ersten Ausführungsform der erfindungsgemäßen Vorrichtung. In Figur 1 wird der Rahmen 1 dargestellt, der aus vier Seitenteilen 2,2', 3, 3' gebildet wird. Die Seitenteile 2,2' und die Seitenteile 3, 3' bilden jeweils ein Seitenteilpaar, dessen Seitenteile einander gegenüber angeordnet sind. Die Innenkanten der Seitenteile sind gradförmig ausgebildet.

In Figur 1a wird ein Querschnitt der sich einander gegenüberliegend angeordneten Seitenteil 2, 2' entlang der Linie A-A der Figur 1 dargestellt. Die Figur zeigt, dass die Innenkanten der dargestellten Seitenteile 2, 2' keilförmig ausgebildet sind. Erfindungsgemäß ist auch eine prismenförmige Ausgestaltung der Innenkanten der Seitenteile 2, 2' möglich.

In Figur 2 wird die Aufsicht einer zweiten Ausführungsform einer erfindungsgemäßen Vorrichtung gezeigt.

In dieser Figur wird der Rahmenaufbau der Figur 1 erneut gezeigt, wobei zusätzlich dargestellt wird, dass die einander gegenüberliegend angeordneten Seitenteile 2, 2' durch Halteteile 4 miteinander verbunden werden. Des Weiteren ist erkennbar, dass die sich einander gegenüberliegenden Seitenteile 3, 3' zwischen den Seitenteilen 2, 2' angeordnet sind.

Zusätzlich ist ein Haltestab 7 am Seitenteil 2 angeordnet, um zu gewährleisten, dass der Rahmen als Gesamteinheit bewegt werden kann.

Figur 2a zeigt einen Querschnitt entlang der Linie A-A der Figur 2. Die Darstellung präsentiert, dass die Innenkanten der Seitenteile 3, 3' auch keilförmig ausgestaltet sind. Außerdem liegen die Seitenteile 3, 3' einander gegenüber und sind zu den Halteteilen 4 benachbart angeordnet.

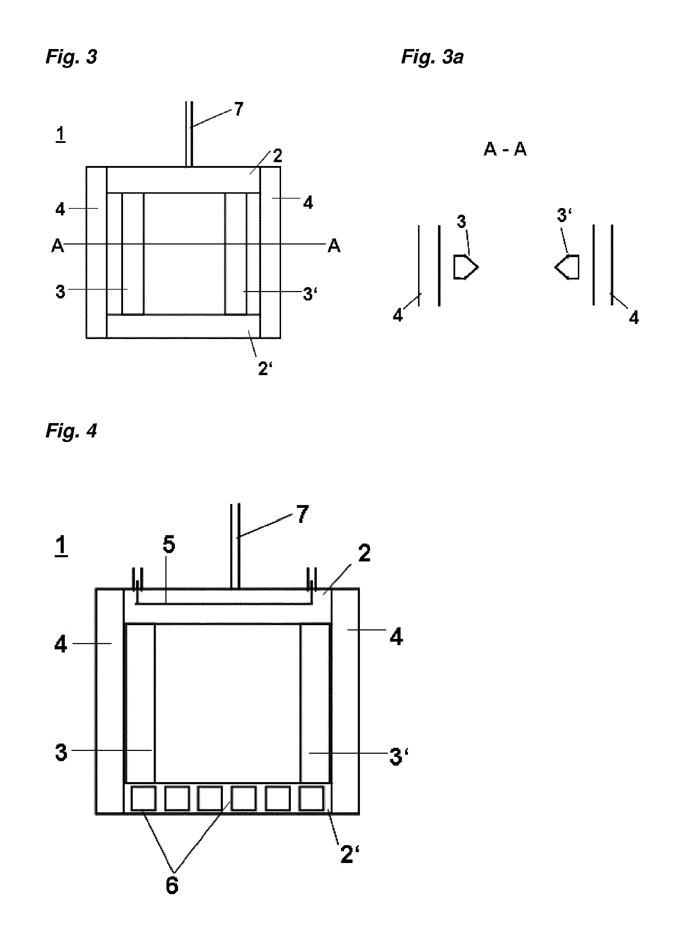

In Figur 3 wird eine dritte Ausführungsform der erfindungsgemäßen Vorrichtung dargestellt. Hier wird gegenüber der Ausführungsform in Figur 2 gezeigt, dass die Seitenteile 3, 3' bewegbar zwischen den Seitenteilen 2, 2' angeordnet sind. Erfindungsgemäß ist dadurch eine Größenverstellung des herzustellenden Films, je nach Anforderungswünschen möglich.

Figur 3a zeigt einen Querschnitt entlang der Linie A-A der Figur 3, wodurch verdeutlich wird, dass die Seitenteile 3, 3' nicht direkt an den Halteteilen 4 angeordnet sind oder mit diesen verbunden sind.

Figur 4 zeigt eine vierte Ausführungsform der erfindungsgemäßen Vorrichtung, wobei die grundlegende Ausgestaltung des Rahmens wie in Figur 2 dargestellt ist. Zusätzlich sind innerhalb der Seitenteilen 2, 2' Elemente 5, 6 zum Kühlen und /oder Heizen angeordnet. Diese Elemente können Bohrungen, Kavitäten, Kühlschlangen oder Peltierelemente sein. Erfindungsgemäß werden diese Elemente zum Durchmischen der Lösung verwendet, um eine homogene Lösung zu gewährleisten und einen erfindungsgemäßen Film herzustellen.

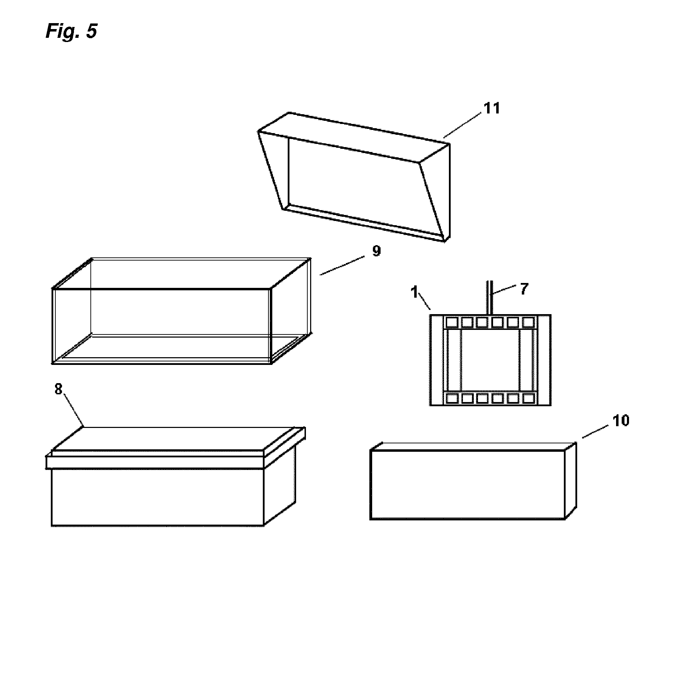

In Figur 5 wird die erfindungsgemäße Vorrichtung schematisch, in ihre Einzelteile zerlegt, dargestellt.

Das Gehäuse, bestehend aus einem Gehäuse-Unterteil 8 und einem Gehäuse-Oberteil 9, das zusammen mit der Abdeckung 11 eine abgeschlossene Zelle zur Umgebung darstellt besteht aus Material das chemisch innert ist. Geeignete Materialien sind beispielsweise Polytetrafluorethylen oder Polymethylmethacrylat. Es können aber auch andere, dem Fachmann bekannte Materialien verwendet werden. Es können natürlich auch nur Teile des Gehäuses aus den inerten Materialien hergestellt sein. Diese Teile sind vorteilhafterweise derartige Teile, welche mit den Lösungen zur Membranherstellung direkt in Kontakt kommen. Das erfindungsgemäße geschlossene System ermöglicht es die Umgebungsparameter, wie Temperatur, Luftfeuchtigkeit oder Druck zu kontrollieren.

Das Gehäuse-Unterteil 8 enthält einen Lösungsreservoir 10, das aus einem U-förmigen Reservoir, dass mit deionisierten Wasser gefüllt ist, besteht. Außerdem sind, um die Feuchtigkeit in der Vorrichtung kontrollieren zu können Heizelemente innerhalb des Gehäuse-Unterteils 8 integriert. Die Feuchtigkeit kann über einen Feuchtigkeitssensor gemessen und überwacht werden. In die zweite rechteckige Ausbuchtung des Gehäuse-Unterteils 8 kann das entfernbare Lösungsreservoir 10 geführt werden. Das erfindungsgemäße Lösungsreservoir 10 ist entfernbar, um eine gründliche Reinigung von jeglichen chemischen Substanzen zu gewährleisten und damit die Stabilität bei Herstellung eines neuen Flüssigkeitsfilms nicht zu limitieren.

Die Dimensionen der gesamten erfindungsgemäßen Vorrichtung sind von der Größe des Rahmens 1 abhängig. Bevorzugt ist ein Rahmen 1, der eine

Breite von 85 mm, eine Höhe von 90 mm und eine Tiefe von 25 mm aufweist. Daraus ergeben sich die äußeren Dimensionen der gesamten erfindungsgemäßen Vorrichtung wie folgt: Breite 190 m, Höhe 170 mm und Tiefe 100 mm.

Der Rahmen 1 wird aus Material hergestellt, das benetzend und chemisch innert ist. Materialen mit diesen Eigenschaften sind beispielsweise Edelstahl oder Aluminium. Dem Fachmann sind aber auch andere geeignet Materialien ohne weiteres bekannt.

Die Kanten des Rahmens, die den dünnen Flüssigkeitsfilm halten sind scharf angeschliffen und abgewinkelt, wodurch die zentrale Formierung des Flüssigkeitsfilms gewährleistet wird.

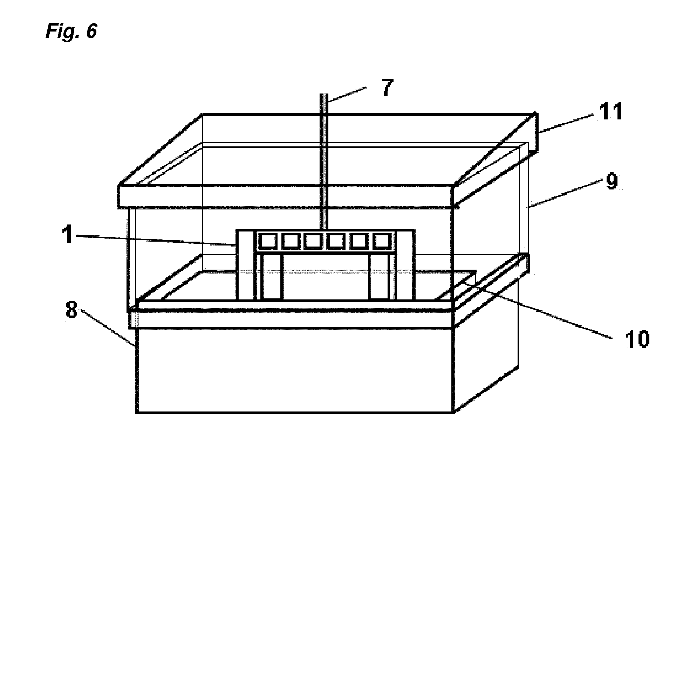

In Figur 6 wird der schematische Zusammenbau der erfindungsgemäßen Vorrichtung dargestellt mittels derer ultradünne Filme hergestellt werden.

Gemäß dem erfindungsgemäßen Verfahren wird der Rahmen 1 senkrecht mit Hilfe eines Motors, mittels des Haltestabs 7, in das Lösungsreservoir 10 eingetaucht. Die Geschwindigkeit des Herausziehens des Rahmens 1 bestimmt die intiale Dicke des dünnen Flüssigkeitsfilms.

Bei Entfernung des Rahmens 1 aus dem Lösungsreservoir 10 dünnt der Flüssigkeitsfilm gravitationsgetrieben aus und es bildet sich ein keilförmiges Flüssigkeitsprofil aus. Durch Kontrolle der Luftfeuchtigkeit oder Temperatur des Rahmens 1 kann der Flüssigkeitsfilm nun verfestigt werden. Es bildet sich eine langzeitstabile Gelschicht aus. Die Temperatur des Rahmens 1 wird über innerhalb der Seitenteile 2,2' des Rahmens 1 eingebaute Elemente 5, 6 gesteuert.

Die thermoelektrischen Wandler, wie Peltierelemente, bilden zusammen mit Temperatursensoren und Kühlblöcken, Kavitäten oder Kühlschläuchen die Elemente zur Temperaturregulation in dem erfindungsgemäßen Rahmen 1 aus.

Die Abfuhr, der durch die thermoelektrischen Wandler produzierten Wärme erfolgt über Kühlblöcke, die auf den thermoelektrischen Wandlern befestigt sind. Die Kühlblöcke werden durch einen separaten Wasserkreislauf gekühlt. Die Kühlblöcke sind wasserdicht und durch eine Dichtung und einen Deckel verschlossen.

Es gibt zwei verschiedene Methoden, um den mit der erfindungsgemäßen Vorrichtung hergestellten dünnen Flüssigkeitsfilm zu verfestigen. Zum Einen kann das Lösemittel, durch Erwärmung des Rahmens 1, verdampfen oder es wird eine heiße Lösung verwendet, die durch Abkühlung des Rahmens 1 unter ihren Schmelzpunkt abgekühlt und verfestigt wird. Der Flüssigkeitsfilm dünnt weiter aus, wodurch die Möglichkeit besteht die Dicke der Membran durch verspäteten Einsatz der Maßnahmen zur Verfestigung der Membran zu kontrollieren.

Währenddessen kann die Dicke über optische Messungen mit Hilfe bildgebender Methoden überwacht werden.

### Bezugszeichenliste

- 1: Rahmen
- 2,2': Seitenteile
- 3,3': Seitenteile
- 4: Halteteil
- 5: Bohrungen, Kavitäten oder Kühlschlangen
- 6: elektrische Komponenten, Peltierelemente
- 7: Haltestab
- 8: Gehäuse-Unterteil
- 9: Gehäuse-Unterteil
- 10: Lösungsreservoir
- 11: Abdeckung

## Patentansprüche

1. Vorrichtung zur Herstellung ultradünner Filme im Nanometerbereich in Form eines Rahmens (1), wobei der Rahmen (1) aus vier Seitenteilen (2, 2', 3, 3') gebildet ist und die Innenkanten der Seitenteile (2, 2', 3, 3') gradförmig ausgebildet sind.

2. Vorrichtung, gemäß Anspruch 1, **dadurch gekennzeichnet, dass** die Innenkanten keilförmig oder prismenförmig ausgestaltet sind.

3. Vorrichtung, gemäß Anspruch 1, **dadurch gekennzeichnet, dass** die Seitenteile (3, 3') bewegbar ausgebildet sind.

4. Vorrichtung, gemäß Anspruch 3, **dadurch gekennzeichnet, dass** der Rahmen durch die Seitenteile (2, 2') und zwei Halteteile (4), welche die Seitenteile (2, 2') miteinander verbinden, ausgebildet wird, wobei die Seitenteile (3, 3') zwischen den Seitenteilen (2, 2') angeordnet sind.

5. Vorrichtung, gemäß mindestens einem der Ansprüche 1 bis 4, **dadurch gekennzeichnet, dass** alle Seitenteile (2, 2', 3, 3'), unabhängig voneinander, Elemente (5, 6) zum Heizen und/oder Kühlen enthalten.

6. Vorrichtung, gemäß Anspruch 5, **dadurch gekennzeichnet, dass** die Elemente zum Heizen und/oder Kühlen (5, 6) unabhängig voneinander ausgewählt sind aus Bohrungen, Kavitäten, Kühlschlangen, Peltierelemente oder anderen elektrischen Komponenten.

7. Vorrichtung, gemäß Anspruch 5 oder 6, **dadurch gekennzeichnet, dass** die Seitenteile (2, 2', 3, 3') jeweils unabhängig voneinander mit unterschiedlichen Temperaturen beaufschlagbar sind.

8. Vorrichtung, gemäß Anspruch 4, **dadurch gekennzeichnet, dass** die Halteteile (4) aus thermisch nichtleitenden Material ausgebildet sind oder eine thermisch nichtleitende Isolierschicht umfassen.

9. Vorrichtung, gemäß Anspruch 8, **dadurch gekennzeichnet, dass** das thermisch nicht leitende Material oder die thermisch nichtleitende Isolierschicht aus Teflon besteht.

10. Vorrichtung, gemäß mindestens einem der Ansprüche 1 bis 9, **dadurch gekennzeichnet, dass** der Rahmen (1) aus einem chemisch innertem und benetzbaren Material ausgebildet ist, wobei das Material bevorzugt ausgewählt ist aus Edelstahl, Aluminium, PTFE oder PMMA.

11. Vorrichtung, gemäß mindestens einem der Ansprüche 1 bis 10, weiterhin umfassend ein Gehäuse, bestehend aus einem Gehäuse-Unterteil (8) und einem Gehäuse-Oberteil (9), welches den Rahmen (1) und ein Lösungsreservoir (10) umgibt.

12. Vorrichtung, gemäß Anspruch 11, **dadurch gekennzeichnet, dass** das Gehäuse aus einem chemisch inertem Material, ausgewählt aus Edelstahl, Polytetrafluorethylen oder Polymethylmethacrylat, besteht.

13. Vorrichtung, gemäß Anspruch 11 oder 12, **dadurch gekennzeichnet, dass** innerhalb des Gehäuses ein Regelelement zur Temperaturregulierung angeordnet ist, wobei die Regelelemente ausgewählt sind aus Heizmatten, Wärmetauschern oder Peltierelementen.

14. Vorrichtung, gemäß Anspruch 11 oder 12, **dadurch gekennzeichnet, dass** innerhalb des Gehäuses ein Verdampfer zur Regulierung der relativen Luftfeuchtigkeit angeordnet ist.

15. Verfahren zur Herstellung ultradünner Filme mittels einer Vorrichtung gemäß der Ansprüche 1 bis 13, wobei man
a) einen Rahmen (1) in ein Lösungsreservoir (10) eintaucht, um einen flüssigen Film zu erzeugen,
b) Zusätze, ausgewählt aus vernetzenden Substanzen ins Lösungsreservoir gibt,
c) den flüssigen Film durch Konvektion innerhalb des Films durchmischt, und
d) den flüssigen Film durch Veränderung der Temperatur, mittels der innerhalb des Rahmens (1) angeordneten Elemente (5,6), verfestigt.
